# EUROPÄISCHE PATENTSCHRIFT

(11) **EP 1 447 472 B1**
(45) Veröffentlichungstag und Bekanntmachung des Hinweises auf die Patenterteilung: **14.05.2008**
(21) Anmeldenummer: 04002788.0
(22) Anmeldetag: 09.02.2004
(51) Int. Cl.: D21G 1/02

(54) **Hydrostatisch gelagerte Walze**
Hydrostatically journalled roll
Rouleau avec des paliers hydrostatiques

(30) Priorität: 11.02.2003 DE 10305511
(43) Veröffentlichungstag der Anmeldung: 18.08.2004
(73) Patentinhaber: Andritz Küsters GmbH, 47805 Krefeld (DE)
(72) Erfinder: Brendel, Bernhard, Dr., 47929 Grefrath (DE); Svenka, Peter, Dr., 47929 Grefrath (DE)
(74) Vertreter: Henseler, Daniela

(56) Entgegenhaltungen:
- DE-A- 3 436 018
- DE-A- 4 319 579
- US-A- 3 705 751

## Beschreibung

Die Erfindung betrifft eine Walze mit einem Walzenkörper und drehfest mit diesem verbundene Walzenzapfen, an denen jeweils ein Außenlager montiert ist für eine Abstützung in einem Lagergehäuse nach dem Oberbegriff des Patentanspruchs 1.

Die Erfindung bezieht sich auf eine Walze, deren Walzenzapfen drehbar in Außenlagern gelagert werden, die ihrerseits in Lagergehäusen untergebracht sind. Die Außenlagerung kann an einer ortsfesten oder verlagerbaren Haltevorrichtung fixiert werden, an die sie die auf die Walzenzapfen wirkenden Kräfte weiterleitet. Die Außenlager gewährleisten zudem eine reibungsarme Drehbarkeit der Walzen und halten sie in ihrer vorgeschriebenen Lage. Derartige Walzen werden für viele Anwendungszwecke eingesetzt, z.B. Kalander, Glättwerke, Pressenpartien, Leit- und Umlenkwalzen von Papier-, Zellstoff- und Druckmaschinen oder Walzwerke für Stahl, Aluminium, Kunststoff, Textil und dergleichen.

Aus DE 43 19 579 A1 ist ein Lager für eine beheizte Walze, insbesondere eine Kalanderwalze, bekannt. Zur Erzielung eines kompakten Aufbaus des Lagers ist vorgesehen, daß ein Abschnitt einer feststehenden Lauffläche durch wenigstens ein erstes radial fixiertes hydrostatisches Lagersegment mit wenigstens einer von Öl durchströmten Lagertasche auf seiten des Laufspaltes im Umfangsbereich der resultierenden Lagerbelastung gebildet ist und in einem gegenüberliegenden Umfangsbereich ein weiterer Abschnitt einer feststehenden Lauffläche durch wenigstens ein zweites hydrostatisches Lagersegment mit radial nachstellbarem, eine von Öl durchströmte Lagertasche auf seiten des Laufspaltes aufweisenden Lagerschuh gebildet ist.

Aus der DE 42 42 022 A1 ist eine Walzenpresse bekannt, die eine untenliegende erste Preßwalze und eine obenliegende zweite Preßwalze aufweist. Eine erste Preßwalze hat einen drehbaren Walzenkörper und einen daran befestigten Lagerzapfen, der mittels eines Wälzlagers in einem Lagerbock ruht. Der Lagerblock steht auf einem rahmenförmigen Maschinengestell. Die zweite Preßwalze ist eine sogenannte Langspalt-Preßwalze mit einem schlauchförmigen, flexiblen Preßmantel, der an zwei drehbaren Manteltragscheiben befestigt ist.

Bei dem Betrieb einer solchen ersten Preßwalze treten betriebsbedingte Belastungen auf, die zu einer Durchbiegung der Walzenzapfen führen und die von den Außenlagern ohne Beeinträchtigung ihrer Funktion aufgenommen werden müssen. Als Wälzlagerart werden im allgemeinen Pendelrollenlager gewählt, die axial und radial belastbar sind und Wellendurchbiegungen ausgleichen. Die Kraftübertragung durch Wälzkörper, die zwischen einem Lagerinnenring und einem Lageraußenring abrollen, verlangt die Überwindung von Rollreibung. Die Wälzlager haben deshalb auch bei der vorgesehenen Belastung sowie sachgemäßer Wartung und Schmierung nur eine begrenzte Lebensdauer, nach der sie ausgewechselt werden müssen.

Die aus wirtschaftlichen Gründen notwendige Steigerung der Produktivität führt ferner zu immer höheren Maschinengeschwindigkeiten. Die unter hohen Geschwindigkeiten und sehr unterschiedlichen sowie stark wechselnden Lastbedingungen arbeitenden Wälzlager leiden dann unter den Unregelmäßigkeiten in der Abrollung der Wälzkörper in den Wälzlagern. Die zunehmend eingesetzten erhöhten Temperaturen tragen schließlich zur Verschlechterung der Schmierbedingungen bei. Die Folge sind hoher Verschleiß und hohe Kosten. Die Wälzlager sind den gesteigerten Betriebsbedingungen nicht mehr gewachsen, insbesondere dann, wenn die Betriebsausfälle und Betriebskosten nicht steigen sollen.

Aufgabe der Erfindung ist es daher, eine Walze nach dem Oberbegriff des Patentanspruchs 1 zu schaffen, deren Außenlager die Walze bei betriebsbedingten Belastungen sicher führen und halten und dabei verschleißarm arbeiten.

Diese Aufgabe wird durch die Merkmale des kennzeichnenden Teils des Patentanspruchs 1 gelöst.

Hierdurch wird eine Walze geschaffen, bei der die Außenlagerung der Walzenzapfen gebildet wird von einer hydrostatischen Doppellagerung eines Tragelementes zwischen einem Lagerinnenring und einem Lageraußenring. Die Ausbildung eines tragfähigen Taschenöldrucks zum Lagerinnenring einerseits als auch zum Lageraußenring andererseits führt zu einer Leichtgängigkeit im Lager. Die auf beiden Seiten des Tragelementes mit Druckmittel beaufschlagten Drucktaschen bewirken zudem eine Vibrationsdämpfung einer im Betrieb stoß- und schwingungserregenden Einflüssen ausgesetzten Walze. Das Druckmittel kann dabei auch zur Beheizung des Lagers genutzt werden, um die thermische Ausdehnung des Lagers an eine thermische Ausdehnung der Walzenzapfen, insbesondere bei beheizten Walzen, anpassen zu können. Es entfällt damit die Notwendigkeit, das Außenlager mit Spiel auszubilden, um mögliche thermische Ausdehnungen der Walzenzapfen auszugleichen, wie dies bei Wälzlagern der Fall ist.

Ein solches Außenlager ermöglicht in allen Betriebszuständen, insbesondere bei hohen Geschwindigkeiten und bei hohen thermischen Belastungen und beim Auftreten von Störkräften, die auf die Walze einwirken, einen verschleißarmen und energiesparenden Betrieb. Die erfindungsgemäße Walze ist zudem trotz ihrer großen Vorteile überraschend einfach in ihrem Konstruktionsaufbau.

Die konzentrisch sphärische Ausbildung der beiden Lagerflächen des Tragelementes zur sphärisch ausgebildet äußeren Umfangsfläche des Lagerinnenringes läßt eine Kugelzone in einer Kugelzone entstehen, so daß das Außenlager Radialkräfte und Axialkräfte auffangen kann. Verformungen der Walzenachse können durch eine Verschiebung der äußeren Umfangsfläche des Lagerinnenringes gegenüber dem Tragelement ausgeglichen werden. Der tragfähige Taschendruck sorgt auch hier für eine Leichtgängigkeit. Eine im Betrieb auftretende Achsdurchbiegung wird folglich von dem Außenlager ausgeglichen, ohne daß es zu einer Änderung der Traggeometrie an der äußeren Umfangsfläche des Lagerinnenringes zu kommen braucht.

Ferner wird dadurch, daß alle Lagerflächen eines Außenlagers radial konzentrisch zur sphärischen äußeren Umfangsfläche des Lagerinnenringes verlaufen, gewährleistet, daß das Tragelement bei allen Betriebszuständen und betriebsbedingten Verformungen der Walzenachse einen konstanten Abstand zu der äußeren Umfangsfläche des Lagerinnenringes behält. Damit wird der Abstand des hydrostatischen Tragelementes zum Lagerinnenring in allen Betriebszuständen unverrückbar konstant und konzentrisch gehalten.

Eine solche hydrostatische Doppellagerung mit kugeliger äußeren Umfangsfläche des Lagerinnenringes und der inneren Umfangsfläche des Lageraußenringes verbessert die Funktionstüchtigkeit und die Betriebssicherheit der Lagerung wesentlich. Durch eine Sicherung des unveränderten Abstandes zwischen den Lagerringen kann eine genaue, bisher nicht erreichte Qualität der Lagerung der Walzenzapfen in Außenlagern erreicht werden.

Eine einwandfreie Dämpfung der Schwingungs- und Vibrationserscheinungen ist ein weiteres unmittelbares Ergebnis. Die Walze ist deshalb für höchste Geschwindigkeiten und Temperaturen ausgelegt. Eine neue und technisch wirksamere Bauweise von Walzen mit Außenlagern wird hierdurch eröffnet.

Die beiden hydrostatischen Lagerungen der hydrostatischen Doppellagerung können mit unterschiedlichen Drücken beaufschlagt werden, um Dämpfungsprofile einstellen zu können.

Die Versorgung der hydrostatischen Lagerungen kann jeweils mit einem konstanten Volumenstrom einer Druckflüssigkeit erfolgen. Alternativ kann auch ein druckgeregelter Strom an Druckflüssigkeit Verwendung finden.

Die Regelung der Außenlagerung kann auch einfach gestaltet werden, in dem ein geschlossener Regelkreis verwendet wird, in dem die beiden druckbeaufschlagten Taschenelemente der hydrostatischen Lagerungen in einem Gleichgewichtszustand beharren. Nur eine Störungsüberwachung kann dann ausreichend sein.

Das Tragelement kann von einem einzigen Ringelement oder mehreren beabstandet zueinander angeordneten Einzelelementen gebildet werden. Die Anzahl und Ausrichtung der Einzelelemente kann in bezug auf eine gewünschte Stützung gewählt werden.

Die Walze kann eine harte oder weiche Oberfläche aufweisen. Die Walze kann beheizbar sein.

Weitere Ausgestaltungen und Vorteile der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.
Fig. 1 zeigt schematisch eine Längsansicht einer Walze gemäß einem ersten Ausführungsbeispiel mit in einem Längsschnitt dargestellten Außenlagern,
Fig. 2 zeigt schematisch den Längsschnitt eines Außenlagers gemäß Fig. 1 in vergrößerter Darstellung,
Fig. 3 zeigt schematisch einen Querschnitt der Walze nach A-A in Fig. 2,
Fig. 4 bis Fig. 6 zeigen schematisch Querschnitte wie in Fig. 3 mit verschiedenen Ausführungsformen hinsichtlich Anzahl und Ausrichtung von Teilelementen eines Tragelementes.

Die Erfindung betrifft eine Walze mit einer Außenlagerung für eine Abstützung in einem Lagergehäuse, das an einer ortsfesten oder verlagerbaren Haltevorrichtung, beispielsweise einer Stuhlung bzw. einem Gestell oder einem Hebel oder einer Führung, angeordnet ist, um die Walze bei einer Rotation zu führen und zu halten. Derartige Walzen werden beispielsweise in einer Vorrichtung zum Bilden mindestens eines Arbeitsspaltes zwischen jeweils zwei Walzen, vorzugsweise einem Kalander oder einer Presse für die Behandlung einer Warenbahn, insbesondere einer Papierbahn, als Mittelwalze oder Gegenwalze, oder in Alleinstellung als Leitwalze, Breitstreckwalze oder Transportwalze verwendet.

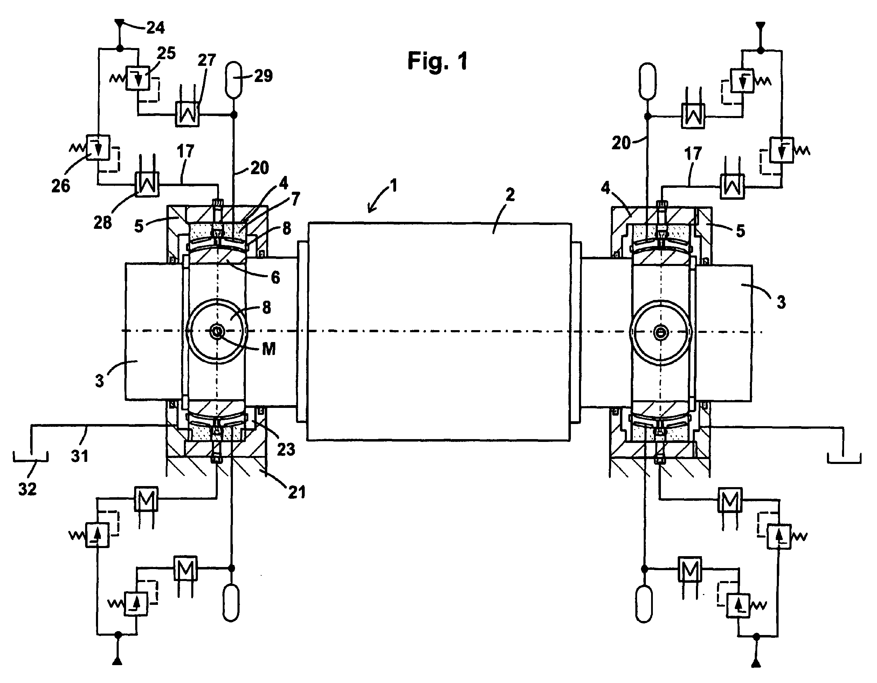

Die Fig. 1 bis 3 zeigen ein erstes Ausführungsbeispiel einer solchen Walze 1. Die Walze 1 umfaßt einen Walzenkörper 2, an dem an beiden Enden Walzenzapfen 3 befestigt oder einstückig mit diesem ausgebildet sind. Die Walzenzapfen 3 können angegossen oder auch eingepreßt oder angeschraubt sein. Die Walzenzapfen 3 sind drehfest mit dem Walzenkörper 2 verbunden und bilden die Endstücke der Walze 1. Aus Gründen der Gewichtsersparnis kann der Walzenkörper 2 hohl sein. Je nach Einsatzzweck der Walze 1 ist die Oberfläche des Walzenkörpers 2 aus verschiedensten Materialien herstellbar.

Die beiden Walzenzapfen 3 bilden Lagerzapfen für eine drehbare Anordnung der Walze 1 in einer Haltevorrichtung. Dazu ist an jedem der beiden Walzenzapfen 3 jeweils ein Außenlager 4 montiert, das über ein feststehendes Lagergehäuse 5 auf einer Stuhlung bzw. Gestell 21 befestigt ist.

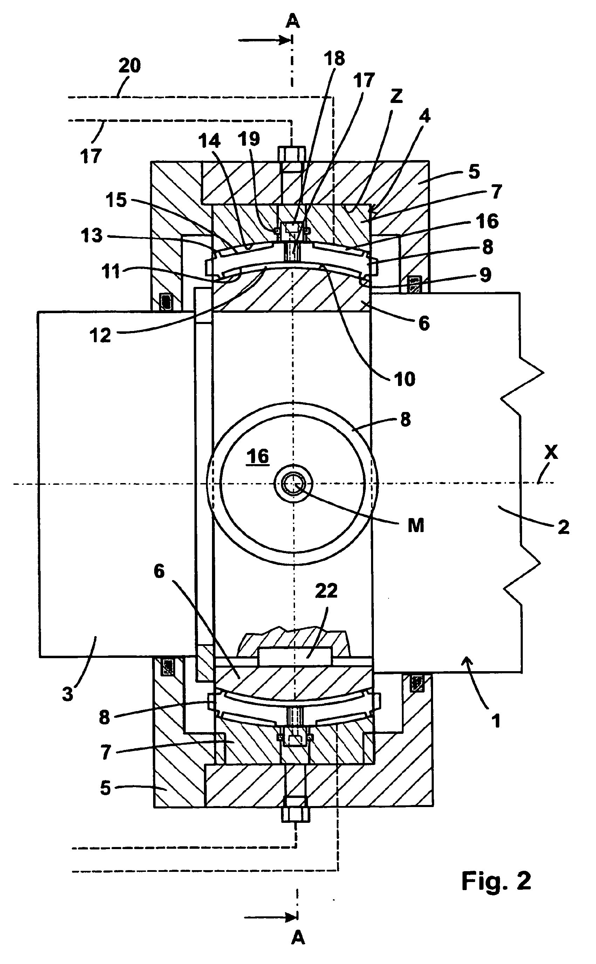

Ein jedes Außenlager 4 umfaßt einen drehfest an einem der Walzenzapfen 3 befestigten Lagerinnenring 6, der in einem Lageraußenring 7 hydrostatisch gelagert ist. Die drehfeste Anordnung des Lagerinnenringes 6 an einem Walzenzapfen 3 kann beispielsweise durch eine Paßfeder 22 (vgl. Fig. 2) sichergestellt werden. Der Lageraußenring 7 ist feststehend im Lagergehäuse 5 angeordnet. Die hydrostatische Lagerung des Lagerinnenringes 6 in dem Lageraußenring 7 erfolgt über ein hydrostatisches Tragelement 8. Der Lagerinnenring 6, der Lageraußenring 7 und das hydrostatische Tragelement 8 bilden eine abgeschlossene Lagereinheit.

Das hydrostatische Tragelement 8 besitzt eine dem Lagerinnenring 6 zugewandte Innen-Lagerfläche 9, die mit einer äußeren Umfangsfläche 10 des Lagerinnenringes 6 eine erste hydrostatische Lagerung mit einem Taschenelement 11 bildet. Das Taschenelement 11 kann eine oder mehrere Drucktaschen 12 aufweisen. Das hydrostatische Tragelement 8 besitzt ferner eine dem Lageraußenring 7 zugewandte Außen-Lagerfläche 13, die mit einer inneren Umfangsfläche 14 des Lageraußenringes 7 eine zweite hydrostatische Lagerung mit einem Taschenelement 15 bildet. Das Taschenelement 15 kann eine oder mehrere Drucktaschen 16 aufweisen. Mit dem hydrostatischen Tragelement 8 wird folglich eine doppelte hydrostatische Lagerung in dem Außenlager aufgebaut.

Das Tragelement 8 kann von einem einzigen ringförmigen Tragelement oder mehreren einzelnen beabstandet zueinander angeordneten Einzeltragelementen gebildet werden, wobei dann mindestens zwei in Umfangsrichtung verteilt angeordnete Einzeltragelemente vorgesehen sind. Bei dem in den Figuren 1 bis 3 dargestellten ersten Ausführungsbeispiel wird das Tragelement 8 von vier umfänglich verteilt angeordneten Einzeltragelementen gebildet.

Das Tragelement 8 ist randseitig seitlich freistehend von einem Lagerraum 23 im Lagergehäuse 5 umgeben, der eine ausgleichende Verschiebbarkeit des Tragelementes 8 gegenüber dem Lageraußenring 7 erlaubt, wie nachstehend beschrieben ist.

Die Taschenelemente 11, 15 der hydrostatischen Doppellagerung können entweder an dem Tragelement 8 ausgebildet sein, wie dies in Fig. 1 bis 3 dargestellt ist, oder alternativ in den Lagerringen 6, 7 selbst angeordnet sein.

Die Taschenelemente 11, 15 werden mit einem Druckmittel für eine Hydrostatik versorgt. Dazu ist das Taschenelement 11 über eine Zuleitung 17, die sich in die Drucktasche 12 verzweigt, mit einem Druckmittelreservoir 24 verbunden. Das Taschenelement 15 ist vorzugsweise über eine eigene Zuleitung 20, die sich in die Drucktasche 16 verzweigt, mit dem gleichen Druckmittelreservoir 24 oder einem eigenen verbunden. Durch die Beaufschlagung der Taschenelemente 11, 15 mit Druckmittel bildet sich zwischen der äußeren Umfangsfläche 10 des Lagerinnenringes 6 und der Innen-Lagerfläche 9 des Tragelementes 8 einerseits und der inneren Umfangsfläche 14 des Lageraußenringes 7 und der Außen-Lagerfläche 13 des Tragelementes 8 andererseits ein inneres und ein äußeres hydrostatisches Lager.

Die Zuleitung 17 für das Druckmittel erfolgt vorzugsweise mittels eines Dichtzapfens 18, der in dem Lageraußenring 7 befestigt, beispielsweise eingeschraubt ist, und über Einsatzstücke, vorzugsweise Dichtungen 19 aus einem elastischen Material, abgedichtet ist. Dadurch wird der Austritt des Druckmittels außerhalb der Zuleitung 17 verhindert. Die Einsatzstücke sind so bemessen, daß sie im Rahmen ihrer Verformbarkeit ein konzentrisches Verschieben des Tragelementes 8 gegenüber dem Lageraußenring 7 für eine ausgleichende Verschiebbarkeit gewährleisten, andererseits das Tragelement 8 gegenüber dem Lagerinnenring 6 positionieren.

Die Zuleitungen 17, 20 für das Druckmittel sind jeweils mit einer Druckmittelversorgung 24 in bekannter Weise verbindbar. Die Verbindung mit der Druckmittelversorgung 24 kann jeweils über eine Regelvorrichtung 25, 26 erfolgen, die den Druck und die Strömung des Druckmittels in den Zuleitungen 17, 20 bestimmen. Die Zuleitungen 17, 20 können dabei mit unterschiedlichen Drücken versorgt werden, so daß jede Zuleitung 17, 20 einen eigene Regelvorrichtung 25, 26 hat. Bevorzugt ist, daß die Taschenelemente 11, 15 mit jeweils einem konstanten Volumenstrom des Druckmittels beaufschlagbar sind. Zur geometrisch genauen Halterung und Positionierung kann das Taschenelemente 15 vorzugsweise über einen druckgeregelten Strom mit Druckmittel versorgt werden.

Durch die hydrostatische Beaufschlagung der Taschenelemente 11, 15 wird das Tragelement 8 an der äußeren Umfangsfläche 10 des Lagerinnenringes 6 hinreichend gefesselt, so daß mechanische Positionierhilfen entfallen können.

Das in die Taschenelemente 11, 15 eingespeiste und über die Schmierspalte der hydrostatischen Lagerungen in den Lageraum 23 eintretende Druckmittel wird über eine Austrittsleitung 31 (vgl. Fig. 1) abgeführt. Die Austrittsleitung 31 kann mit einer Auffangvorrichtung 32 verbunden sein.

In der Zuleitung 20 zur Druckmittelversorgung 24 ist zudem vorzugsweise ein Druckspeicherelement 29 eingebaut, das bei störenden Schwingungen, wie Barring-Erscheinungen und dergleichen, durch verursachte Druckstöße auf die hydrostatischen Lagerungen aus dem Taschenelement 15 verdrängtes Druckmittel elastisch aufnehmen kann. Für hydrostatisch gelagerte Walzen ist die Funktion der Druckspeicherelemente beispielsweise in der DE 3151001C2 beschrieben. Ein mögliches Rattern der Walze 1 im Betrieb kann hierdurch ausgeglichen werden. Eine individuelle und voneinander unabhängige Einstellung der Drücke in den beiden Taschenelementen 11, 15 der hydrostatischen Doppellagerung erlaubt zudem einen zusätzliche Anpassung innerhalb des Außenlagers.

In der Zuleitungen 17, 20 können ferner Temperatursteuereinrichtungen 27, 28 eingebaut sein, um das Druckmittel zu heizen oder zu kühlen. Insbesondere dann, wenn die Walze 1 beheizt oder hochbeheizt ist, wozu Heizleitungen durch die Walzenzapfen 3 geführt sind, kann eine Temperaturanpassung der Außenlager an die Temperatur der Walzenzapfen 3 erwünscht sein. Die thermische Ausdehnung von Walzenzapfen 3 und Außenlager kann so aneinander angepaßt werden, wobei eine individuelle und voneinander unabhängige Einstellung der Temperatur des Druckmittels in den beiden Taschenelementen 11, 15 der hydrostatischen Doppellagerung eine zusätzliche Anpassung des Außenlagers selbst erlaubt.

Der an dem Walzenzapfen 3 drehfest angeordnete Lagerinnenring 6 besitzt eine äußere Umfangsfläche 10, die sphärisch ausgebildet ist. Diese kugelige Oberfläche besitzt einen Mittelpunkt M auf der Mittelachse X der Walze 1. Die äußere Umfangsfläche 10 ist nur ein Teilstück einer Kugel um den Mittelpunkt M, so daß die äußere Umfangsfläche 10 eine Kugelzone einer Kugel bildet. Dieser sphärische Lagerinnenring 6, der mit den Walzenzapfen 3 rotiert, wird von sphärischen hydrostatischen Lagern getragen und positioniert. Dazu besitzt das Tragelement 8 Lagerflächen 9, 13, die ebenfalls sphärisch ausgebildet sind, und zwar konzentrisch zum Mittelpunkt M der sphärisch ausgebildeten äußeren Umfangsfläche 10 des Lagerinnenringes 6. Gleiches gilt auch für die innere Umfangsfläche 14 des Lageraußenringes 7, die sphärisch ausgebildet ist und konzentrisch zum Mittelpunkt M verläuft. Das Außenlager führt und trägt die durch axiale und radiale Kräfte belasteten Walzenzapfen 3, und zwar unter Aufnahme beider Kräfte, der radialen und axialen Kräfte.

Wie bereits ausgeführt, kann die Walze 1 beheizbar ausgebildet sein. Die Walze 1 kann als harte Walze eingesetzt werden. Der Walzenkörper 2 kann einen äußeren elastischen Belag aufweisen, um die Walze 1 als eine weiche Walze auszubilden.

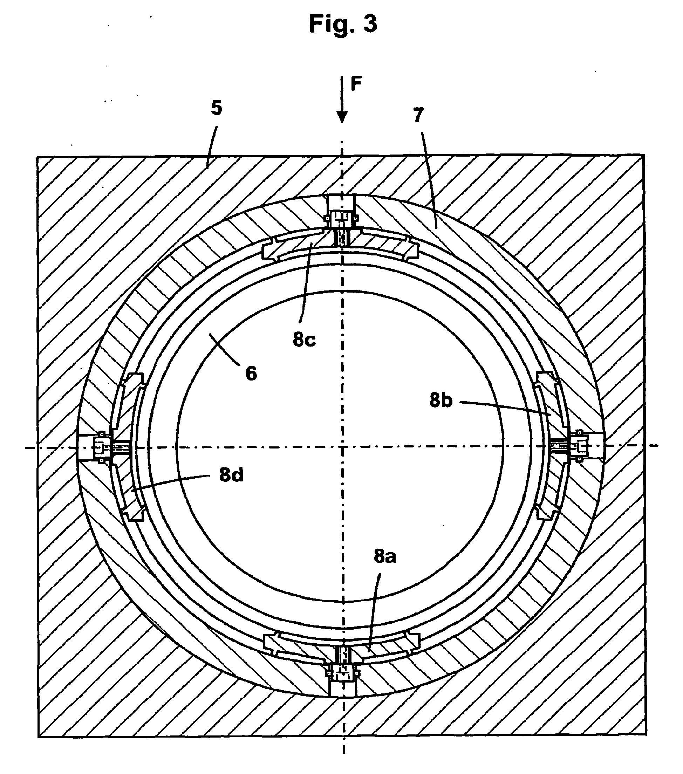

Fig. 3 zeigt für das Ausführungsbeispiel die Anordnung des Tragelementes 8 zwischen dem Lagerinnenring 6 und dem Lageraußenring 7 eines Außenlagers. Das Tragelemente 8 besteht hier aus mindestens zwei Einzeltragelementen, die mit Abstand zueinander und umfangsmäßig verteilt angeordnet sind. Das Tragelement 8 besteht beispielsweise aus vier Einzeltragelementen 8a, 8b, 8c und 8d, die bezogen auf eine Auflagerkraft F horizontal und vertikal ausgerichtet sind.

Durch eine wählbare Ausrichtung der Einzeltrageelemente zur Auflagerkraft F und Länge der Einzeltragelemente in bezug auf ihre umfangsmäßige Erstreckung kann die Stützkraft des Außenlagers unterschiedlich ausgerichtet werden.

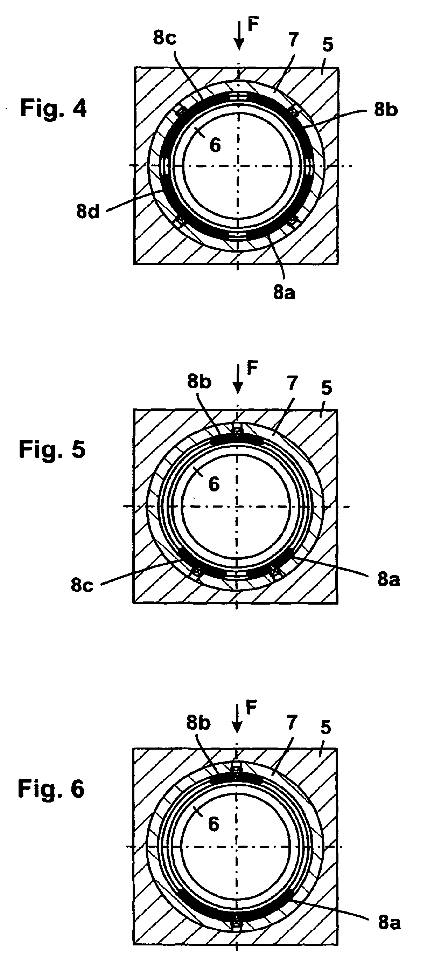

Die Fig. 4 bis 6 zeigen beispielhaft verschiedene Positonierungen und Größen der Einzeltragelemente. Bei dem Ausführungsbeispiel gemäß Fig. 4 sind vier Einzeltragelemente 8a, 8b, 8c, 8d gleicher Größe vorgesehen, die diagonal zur Auflagerkraft F angeordnet sind. Bei dem Ausführungsbeispiel gemäß Fig. 5 sind drei Einzeltragelemente 8a, 8b, 8c gleicher Größe vorgesehen, die in vertikaler Ausrichtung angeordnet sind, mit oberseitig zur Auflagerkraft einem Einzeltragelement 8b und zwei Einzeltragelementen 8a, 8c unterseitig. Bei dem Ausführungsbeispiel gemäß Fig. 6 sind zwei Einzeltragelemente 8a, 8b unterschiedlicher Größe vorgesehen, die in vertikaler Ausrichtung angeordnet sind, mit einem zur Auflagerkraft oberseitigen kurzen Einzeltragelement 8b und einem großen Einzeltragelement 8a unterseitig.

## Patentansprüche

1. Walze mit einem Walzenkörper (2) und drehfest mit diesem verbundene Walzenzapfen (3), an denen jeweils ein Außenlager (4) montiert ist für eine Abstützung in einem Lagergehäuse (5), wobei die Außenlager (4) jeweils einen drehfest an einem der Walzenzapfen (3) befestigten Lagerinnenring (6) aufweisen, der in einem Lageraußenring (7) des Außenlagers (4) hydrostatisch gelagert ist, der Lagerinnenring (6) über jeweils ein hydrostatisches Tragelement (8) in dem Lageraußenring (7) gelagert ist, das mit einer inneren Umfangsfläche (14) des Lageraußenrings (7) und mit einer äußeren Umfangsfläche (10) des Lagerinnenringes (6) jeweils eine hydrostatische Lagerung mit einem Taschenelement (11, 15) ausbildet, **dadurch gekennzeichnet, daß** die äußere Umfangsfläche (10) des Lagerinnenringes (6) sphärisch ausgebildet ist und mit den sphärischen Lagerflächen (9, 13) des Tragelementes (8) und der ebenfalls sphärisch ausgebildeten inneren Umfangsfläche (14) des Lageraußenringes (7) konzentrisch verläuft.

2. Walze nach Anspruch 1, **dadurch gekennzeichnet, daß** die sphärische, äußere Umfangsfläche (10) des Lagerinnenringes (6) eine Kugelzone einer einen Mittelpunkt auf einer Walzen-Mittelachse besitzenden Kugel ist.

3. Walze nach Anspruch 1 oder 2, **dadurch gekennzeichnet, daß** das hydrostatische Tragelement (8) ein einzelnes Ringtragelement ist.

4. Walze nach Anspruch 1 oder 2, **dadurch gekennzeichnet, daß** das hydrostatische Tragelement (8) von mindestens zwei in Umfangsrichtung verteilt angeordneten Einzeltragelementen (8a, 8b, 8c, 8d) gebildet ist.

5. Walze nach Anspruch 4, **dadurch gekennzeichnet, daß** die Einzeltragelementen (8a, 8b, 8c, 8d) in Größe und Position an eine Belastung anpaßbar sind.

6. Walze nach einem der Ansprüche 1 bis 5, **dadurch gekennzeichnet, daß** das hydrostatische Tragelement (8) an einer inneren, dem Lagerinnenring (6) zugewandten Innenring-Lagerfläche (9) ein inneres Taschenelement (11) aufnimmt.

7. Walze nach einem der Ansprüche 1 bis 6, **dadurch gekennzeichnet, daß** das hydrostatische Tragelement (8) an einer äußeren, dem Lageraußenring (7) zugewandten Außenring-Lagerfläche (13) ein äußeres Taschenelement (15) aufnimmt.

8. Walze nach einem der Ansprüche 1 bis 7, **dadurch gekennzeichnet, daß** die hydrostatischen Lagerungen an jeweils eine Zuleitung (17, 20) für eine Druckmittel zur Speisung der Taschenelemente (11, 15) angeschlossen sind.

9. Walze nach Anspruch 8, **dadurch gekennzeichnet, daß** die Zuleitungen (17, 20) für das Druckmittel jeweils eine Regelvorrichtung (25, 26) aufweisen, die den Druck und die Strömung des Druckmittels bestimmen.

10. Walze nach Anspruch 8 oder 9, **dadurch gekennzeichnet, daß** die Taschenelemente (11, 15) mit jeweils einem konstanten Volumenstrom einer Druckflüssigkeit beaufschlagbar sind.

11. Walze nach einem der Ansprüche 8 bis 10, **dadurch gekennzeichnet, daß** die Zuleitungen (17, 20) für das Druckmittel jeweils eine Temperatursteuereinrichtung (27, 28) aufweisen, die das Druckmittel auf eine wählbare Temperatur einstellen.

12. Walze nach einem der Ansprüche 8 bis 11, **dadurch gekennzeichnet, daß** die Zuleitung (20) ein Druckspeicherelement (29) zur Dämpfung von auf das Druckmittel wirkenden Druckstößen aufweist.

13. Walze nach einem der Ansprüche 1 bis 12, **dadurch gekennzeichnet, daß** die Walze (1) beheizbar ist.

14. Walze nach einem der Ansprüche 1 bis 13, **dadurch gekennzeichnet, daß** der Walzenkörper (2) einen äußeren elastischen Belag aufweist.

## Claims

1. Roll comprising a roll body (2) and roll journals (3) firmly connected to the latter so as to rotate with it, on which in each case an outer bearing (4) is mounted to be supported in a bearing housing (5), the outer bearings (4) in each case having a bearing inner ring (6) which is firmly fixed to one of the roll journals (3) so as to rotate with it and being mounted hydrostatically in a bearing outer ring (7) of the outer bearing (4), **characterized in that** the bearing inner ring (6) is in each case mounted via a hydrostatic supporting element (8) in the bearing outer ring (7) which, with an inner circumferential surface (14) of the bearing outer ring (7) and with an outer circumferential surface (10) of the bearing inner ring (6), in each case forms a hydrostatic mounting with a pocket element (11, 15), **characterized in that** the outer circumferential surface (10) of the bearing inner ring (6) is spherical and runs concentrically with the spherical bearing surfaces (9, 13) of the supporting element (8) and the likewise spherical inner circumferential surface (14) of the bearing outer ring (7).

2. Roll according to claim 1, **characterized in that** the spherical, outer circumferential surface (10) of the bearing inner ring (6) is a spherical zone of a sphere having a centre on the roll mid-axis.

3. Roll according to claim 1 or 2, **characterized in that** the hydrostatic supporting element (8) is a single annular supporting element.

4. Roll according to claim 1 or 2, **characterized in that** the hydrostatic supporting element (8) is formed by at least two individual supporting elements (8a, 8b, 8c, 8d) arranged distributed in the circumferential direction.

5. Roll according to claim 4, **characterized in that** the size and position of the individual supporting elements (8a, 8b, 8c, 8d) can be matched to a loading.

6. Roll according to one of claims 1 to 5, **characterized in that** the hydrostatic supporting element (8) accommodates an inner pocket element (11) on an inner inner ring bearing surface (9) facing the bearing inner ring (6).

7. Roll according to one of claims 1 to 6, **characterized in that** the hydrostatic supporting element (8) accommodates an outer pocket element (15) on an outer outer ring bearing surface (13) facing the bearing outer ring (7).

8. Roll according to one of claims 1 to 7, **characterized in that** the hydrostatic mountings are connected to a feed line (17, 20) in each case for a pressure medium for feeding the pocket elements (11, 15).

9. Roll according to claim 8, **characterized in that** the feed lines (17, 20) for the pressure medium each have a control device (25, 26), which determine the pressure and the flow of the pressure medium.

10. Roll according to claim 8 or 9, **characterized in that** the pocket elements (11, 15) can in each case have a constant volume flow of a pressurised fluid applied to them.

11. Roll according to one of claims 8 to 10, **characterized in that** the feed lines (17, 20) for the pressure medium in each case have a temperature control device (27, 28), which set the pressure medium to a selectable temperature.

12. Roll according to one of claims 8 to 11, **characterized in that** the feed line (20) has a pressure storage element (29) for damping pressure shocks acting on the pressure medium.

13. Roll according to one of claims 1 to 12, **characterized in that** the roll (1) is heatable.

14. Roll according to one of claims 1 to 13, **characterized in that** the roll body (2) has an external resilient cover.

## Revendications

1. Cylindre, comprenant un corps de cylindre (2) et des tourillons de cylindre (3) reliés solidairement en rotation à celui-ci, sur lesquels sont montés respectivement des paliers extérieurs (4) pour un soutien dans un carter de palier (5), les paliers extérieurs (4) comprenant chacun une bague intérieure de palier (6), fixée sur l'un des tourillons de cylindre (3), qui est montée de manière hydrostatique dans une bague extérieure de palier (7) du palier extérieur (4), la bague intérieure de palier (6) est montée dans la bague extérieure de palier (7) via un élément porteur hydrostatique (8) respectif, lequel forme avec une surface périphérique intérieure (14) de la bague extérieure de palier (7) et avec une surface périphérique extérieure (10) de la bague intérieure de palier (6) un montage hydrostatique avec un élément formant poche (11, 15), **caractérisé en ce que** la surface périphérique extérieure (10) de la bague intérieure de palier (6) est réalisée sphérique et s'étend de façon concentrique aux surfaces de palier sphériques (9, 13) de l'élément porteur (8) et à la surface périphérique intérieure (14), également réalisée sphérique, de la bague extérieure de palier (7).

2. Cylindre selon la revendication 1, **caractérisé en ce que** la surface périphérique extérieure sphérique (10) de la bague intérieure de palier (6) est une zone sphérique d'une sphère qui possède un centre sur un axe médian du cylindre.

3. Cylindre selon la revendication 1 ou 2, **caractérisé en ce que** l'élément porteur hydrostatique (8) est un élément porteur annulaire unique.

4. Cylindre selon la revendication 1 ou 2, **caractérisé en ce que** l'élément porteur hydrostatique (8) est formé par au moins deux éléments porteurs individuels (8a, 8b, 8c, 8d) agencés de façon répartie en direction périphérique.

5. Cylindre selon la revendication 4, **caractérisé en ce que** les éléments porteurs individuels (8a, 8b, 8c, 8d) sont adaptables à une charge quant à leur taille et à leur position.

6. Cylindre selon l'une des revendications 1 à 5, **caractérisé en ce que** l'élément porteur hydrostatique (8) reçoit un élément formant poche intérieur (11) au niveau d'une surface de palier intérieure (9), tournée vers la bague intérieure de palier (6).

7. Cylindre selon l'une des revendications 1 à 6, **caractérisé en ce que** l'élément porteur hydrostatique (8) reçoit un élément formant poche extérieur (15) au niveau d'une surface de palier extérieure (13), tournée vers la bague extérieure de palier (7).

8. Cylindre selon l'une des revendications 1 à 7, **caractérisé en ce que** les montages hydrostatiques sont respectivement raccordés à une conduite d'amenée (17, 20) pour un fluide sous pression pour alimenter les éléments formant poche (11, 15).

9. Cylindre selon la revendication 8, **caractérisé en ce que** les conduites d'amenée (17, 20) pour le fluide sous pression présentent chacune un dispositif de régulation (25, 26) qui détermine la pression et le débit du fluide sous pression.

10. Cylindre selon la revendication 8 ou 9, **caractérisé en ce que** les éléments formant poche (11, 15) sont susceptibles d'être alimentés respectivement avec un liquide sous pression sous un courant volumétrique constant.

11. Cylindre selon l'une des revendications 8 à 10, **caractérisé en ce que** les conduites d'amenée (17, 20) pour le fluide sous pression présentent chacune un dispositif de commande de température (27, 28) qui amène le fluide sous pression à une température choisie.

12. Cylindre selon l'une des revendications 8 à 11, **caractérisé en ce que** la conduite d'amenée (20) comprend un élément accumulateur de pression (29) pour amortir les à-coups de pression agissant sur le fluide sous pression.

13. Cylindre selon l'une des revendications 1 à 12, **caractérisé en ce que** le cylindre (1) est susceptible d'être chauffé.

14. Cylindre selon l'une des revendications 1 à 13, **caractérisé en ce que** le corps de cylindre (2) présente un revêtement élastique extérieur.
